(19) Europäisches Patentamt
European Patent Office
Office européen des brevets

(11) **EP 4 174 732 B1**

(12) **EUROPEAN PATENT SPECIFICATION**

(45) Date of publication and mention
of the grant of the patent:
**06.05.2026 Bulletin 2026/19**

(21) Application number: **22204496.8**

(22) Date of filing: **28.10.2022**

(51) International Patent Classification (IPC):
**G06N 10/60** *(2022.01)*      **G06N 7/01** *(2023.01)*
**G06N 5/01** *(2023.01)*

(52) Cooperative Patent Classification (CPC):
**G06N 10/60; G06N 5/01; G06N 7/01**

(54) **ESTIMATING AN EXTREMUM OF THE EXPECTATION VALUE OF A RANDOM FIELD**

SCHÄTZUNG EINES EXTREMITÄT DES ERWARTETEN WERTES EINES ZUFALLSFELDES

ESTIMATION D'UN EXTREMUM DE LA VALEUR DE PRÉVISION D'UN CHAMP ALÉATOIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.10.2021 GB 202115597**

(43) Date of publication of application:
**03.05.2023 Bulletin 2023/18**

(73) Proprietor: **Phasecraft Limited**
**London W1T 2NS (GB)**

(72) Inventor: **BOSSE, Jan Lukas**
**London, W1T 2NS (GB)**

(74) Representative: **HGF**
**HGF Limited**
**4th Floor, 1 City Square**
**Leeds LS1 2ES (GB)**

(56) References cited:
**US-A1- 2021 034 998**

• **FLAVIO BACCARI ET AL: "Verifying the output of
quantum optimizers with ground-state energy
lower bounds", ARXIV.ORG, CORNELL
UNIVERSITY LIBRARY, 201 OLIN LIBRARY
CORNELL UNIVERSITY ITHACA, NY 14853, 3
November 2020 (2020-11-03), XP081804018, DOI:
10.1103/PHYSREVRESEARCH.2.043163**
• **KEVIN J SUNG ET AL: "Using models to improve
optimizers for variational quantum algorithms",
ARXIV.ORG, CORNELL UNIVERSITY LIBRARY,
201 OLIN LIBRARY CORNELL UNIVERSITY
ITHACA, NY 14853, 11 August 2020 (2020-08-11),
XP081738728**

## Description

### Technical Field

The present disclosure relates to estimating an extremum of an expectation value of a random field. In particular, the present disclosure relates to optimising input parameters provided to a computing system, wherein the computing system is configured to estimate an expectation value, and the uncertainty of that estimate, of a random variable of interest for a set of input parameters. The present disclosure may find particular application in quantum computing.

### Background

Advances in quantum computing have ushered in an era of noisy, intermediate-scale quantum (NISQ) hardware, which can no longer be simulated effectively classically, even on the world's largest supercomputers. One of the most important application areas of near-term quantum computers is predicted to be simulating quantum mechanical systems. Quantum computers could approximate values of physical quantities which are hard to obtain classically.

However, this NISQ hardware is still extremely limited in terms of the number of qubits that can be controlled and the decoherence time - the time after which the fidelity of the qubits has degraded to the extent that the results of a performed algorithm are effectively meaningless. Currently quantum computing architectures have on the order of $\approx 50$ qubits, and are only capable of implementing quantum circuits up to a depth of order $\approx 50$ before decoherence renders the results meaningless. Critical factors that determine the feasibility of performing an algorithm include its qubit requirements (e.g. the number of qubits required and the ability to control interactions between them), its gate cost and its circuit depth (a measure of algorithm runtime).

NISQ quantum computers are affected by noise and errors which can lead to highly inaccurate results being produced. Standard quantum fault-tolerance techniques introduce significant overheads in terms of both the number of qubits required and the associated gate cost, and so such techniques are unsuitable for the NISQ regime.

To at least partially alleviate the burden of such challenges, several classical-quantum hybrid algorithms have been proposed. In a classical-quantum hybrid algorithm, both classical and quantum resources are used to perform a computational task.

One non-trivial example is the Variational Quantum Eigensolver (VQE) algorithm, which uses quantum and classical resources to find variational solutions to eigenvalue and optimization problems that are not accessible to traditional classical computers. More specifically, the VQE algorithm is used to find eigenvalues of a (usually large) matrix *H* which may represent the Hamiltonian of a physical system. A quantum subroutine is run inside of a classical optimization loop. The quantum subroutine comprises preparing an ansatz quantum state $|\psi(\omega)\rangle$ parametrised by a parameter $\omega$ and measuring the expectation value $\langle\psi(\omega)|H|\psi(\omega)\rangle$. The variational principle ensures that this expectation value is always greater than the smallest eigenvalue of the matrix *H*. In the classical optimization loop, the parameter $\omega$ can be iteratively adjusted until a convergence condition is met.

The present invention has been devised in the foregoing context.

"Verifying the output of quantum optimizers with ground-state energy lower bounds" Flavio Baccari et al, arxiv.org, Cornell University Library, 3 November 2020, DOI: 10.1103/PHYSREVRESEARCH.20.043163 relates to a consideration of the use of relaxations to a ground-state problem as a benchmark for the output of quantum optimisers.

### Summary

The present invention is defined in the independent claims. Further embodiments of the invention are set forth in the dependent claims.

One of the most prominent quantum algorithms in the Noisy Intermediate-Scale Quantum (NISQ) era [1] is the variational quantum eigensolver [2] (VQE). The VQE approach attempts to produce the ground (lowest-energy) state of a quantum or classical system by optimising over some family of quantum circuits. A quantum computer is used as a subroutine within an overall classical optimisation loop. The role of the quantum computer is to calculate the energy of the state produced by a parametrised quantum circuit. The information obtained from the energy measurements is used by the classical optimiser to update the parameters of the quantum circuit, and ultimately to find the lowest-energy state.

This optimisation process is challenging as measurements are noisy, due both to statistical noise and to errors in the quantum hardware. Standard optimisation algorithms that assume exact knowledge of the objective function, such as Broyden-Fletcher-Goldfard-Shanno (BFGS) algorithm, struggle with this nonstandard setting. However, in the VQE setting the energy is estimated as the sample mean of many energy measurements, giving information about its uncertainty. This is unlike the standard setting for stochastic optimisation, where this information is not typically known. Here we introduce a new algorithm for the VQE optimisation procedure, which we call BayesMGD. It is based on ideas from the previously known MGD (Model Gradient Descent) algorithm [3], [4] but incorporates concepts from Bayesian analysis to make optimal use of the information gained from noisy measurements at each time step of the algorithm. The algorithm can also be understood as a Kalman filter [5].

The optimisation algorithms presented herein have been specifically adapted taking into account the technical characteristics of quantum computers. In particular, the optimisation algorithms have been adapted to utilise the inherently noisy results which are generated by a quantum computer. An algorithm executed on a classical computer will generally return an identical result multiple times for a given set of input parameters. However, the results returned by a quantum computer are noisy, such that executing an algorithm multiple times on a quantum computer using the same input parameters will generally return a distribution of results. This property of quantum computers is generally handled by executing an algorithm multiple times and taking some average of the results. It has been realised that the noisy results generated by a quantum computer for a given set of input parameters provides information about the uncertainty associated with a result generated by the quantum computer. This uncertainty information can be advantageously used in an optimisation algorithm in order to decrease a number of iterations required to reach a result. That is, the optimisation algorithms presented herein utilise technical considerations of the functioning of quantum computers to improve the speed and computational efficiency with which a result can be arrived at when implementing an optimisation algorithm which utilises a quantum computer.

The algorithm works by performing iterative, Bayesian updates of a quadratic, local surrogate model to the objective function. At the start of iteration, some prior, noisy knowledge of a local quadratic fit to the objective function is assumed. Then the objective function is evaluated in a neighbourhood of the current parameters and this evaluation data is used to update the local quadratic fit to a more precise one. The gradient of this improved quadratic fit is used to perform a gradient descent step. Now the iteration loop starts again, with the updated local fit used as the new prior. Before the first iteration the quadratic, local fit is assumed to be the zero function with large uncertainty.

We found that BayesMGD outperformed MGD in some numerical experiments, in terms of the number of iterations required to find an accurate solution. Other key advantages of the BayesMGD algorithm are that it requires less information to be maintained, and uses reduced classical computation time per iteration. The Bayesian update step in the algorithm is theoretically optimal, given assumptions that are usually well justified in the VQE setting, so we expect it will perform better than other algorithms for larger and more complex problem sizes than are currently accessible to experiments.

According to a first aspect of the disclosure there is provided a method of estimating an extremum of an expectation value of a random field, the method executed on a computer and utilising a quantum computer, wherein the quantum computer comprises a quantum circuit parameterised by a set of circuit parameters and configured to estimate an expectation value of a random variable of interest for the set of circuit parameters, wherein the method comprises: storing a set of circuit parameters for the quantum circuit; storing a set of model parameters for a surrogate model, wherein the surrogate model is configured, based on the stored set of model parameters, to approximate the expectation value of the random variable of interest produced by the quantum computer for circuit parameters in the vicinity of the stored set of circuit parameters; storing uncertainties associated with each of the stored set of model parameters; performing an iterative optimisation to update the stored set of circuit parameters until a criterion is met indicating that the stored set of circuit parameters are approximate to circuit parameters representing an extremum of the expectation value of the random field, wherein the iterative optimisation comprises a plurality of iterations to update the stored set of circuit parameters, stored set of model parameters and stored uncertainties associated with the model parameters, wherein each iteration comprises: determining a plurality of sampling sets of circuit parameters within a sampling radius of the stored set of circuit parameters; for each of the plurality of sampling sets of circuit parameters, executing the quantum computer to determine estimates of the expectation value and the uncertainty of the estimate calculated by the quantum computer for each of the plurality of sampling sets of circuit parameters; determining an updated set of model parameters for the surrogate model in dependence on the estimates and uncertainties of the expectation values calculated for each of the sampling sets of circuit parameters, the stored model parameters and the stored uncertainties associated with the stored model parameters; determining interim uncertainties associated with the updated model parameters in dependence on the uncertainty of the expectation values calculated for each of the sampling sets of circuit parameters and the stored uncertainties associated with the stored model parameters; determining a gradient of the surrogate model at the stored circuit parameters when parameterised by the updated set of model parameters; determining an updated set of circuit parameters in dependence on the stored set of circuit parameters and the determined gradient of the surrogate model, wherein the updated set of circuit parameters represents a descent or ascent along the determined gradient of the surrogate model, relative to the stored set of circuit parameters; determining updated uncertainties associated with the updated model parameters for the updated set of circuit parameters, wherein the updated uncertainties are determined in dependence on the determined interim uncertainties and a step size of the descent or ascent along the gradient of the surrogate model used to determine the updated set of circuit parameters; updating the stored circuit parameters to correspond to the determined updated set of circuit parameters; updating the stored set of model parameters to correspond to the determined updated set of model parameters; and updating the stored uncertainties associated with the model parameters to correspond to the determined updated uncertainties.

As explained above, the quantum computer returns noisy results which provide information about uncertainties of estimates of the expectation value, which are returned by the quantum computer. The methods presented herein utilise this uncertainty to improve the optimisation algorithm. In particular, in each iteration step, the uncertainties associated with each of the estimates of the expectation value are used to update model parameters for the surrogate model. For example, when determining updated model parameters which best fit the estimates returned by the quantum computer, an estimate having a higher uncertainty may contribute less to the determined updated model parameters than an estimate having a lower uncertainty. Consequently, the accuracy with which the surrogate model parameterised by the updated model parameters represents the random field within the sampling radius is improved by using the uncertainties in the update step.

Furthermore, the uncertainties associated with the estimates returned by the quantum computer are also used to determine uncertainties in the updated model parameters. The uncertainties in the updated model parameters (which are subsequently updated according to the step size taken along the gradient of the surrogate model) are fed into subsequent iterations of the optimisation algorithm. In each iteration of the optimisation algorithm, the model parameters are updated based on: the latest estimates returned by the quantum computer in the sampling radius, the uncertainty of those results, the model parameters determined in the previous iteration, and the uncertainties of the model parameters determined in the previous iteration. In this way, the information determined in all previous iterations and the uncertainties associated with that information feeds into each model parameter update step. All information obtained during previous iteration steps is therefore used in all subsequent iterations such that obtained information is not discarded.

This use of information determined during previous iterations and the uncertainty associated with that information has been found to improve the accuracy of the fitting of the surrogate model which in turn improves the speed and efficiency with which the optimisation algorithm arrives at a result. For example, as is described in further detail below, the use of uncertainty in the update steps of the optimisation algorithms presented herein have been shown to decrease the number of iterations needed before a criterion is met and the optimisation algorithm returns a result. In this way, the optimisation algorithms presented herein utilise the technical characteristics of the functioning of quantum computers to improve the computational efficiency of an optimisation algorithm which utilises a quantum computer.

The optimisation algorithms presented herein also utilise an understanding that it would be very difficult and/or computationally impossible to construct a surrogate model for the random field which is valid across all parameter space. This is particularly true where the random field corresponds to a VQE algorithm on a quantum computer, as the energy landscape within VQE can be highly complex. The optimisation algorithms presented herein therefore utilise a local surrogate model which is fitted to results within a local sampling radius. The model parameters of the local surrogate model are determined and updated in each iteration of the optimisation algorithm such that the optimisation algorithm is only fitted to results within the sampling radius used in that iteration. However, the model parameters from a previous iteration along with uncertainties associated with those model parameters are also used to determine the updated model parameters in each iteration. Information from previous iterations is not therefore lost but is fed forward into subsequent iterations in order to improve the accuracy with which the surrogate model represents the random field within the sampling radius.

The computer may comprise one or more classical computers. For example, the computer may comprise at least a processor and a memory. The memory may store instructions which when executed by the processor cause the computer to implement any of the methods described herein. The terms computer and computing apparatus are used interchangeable herein and generally refer to any classical computing apparatus.

Storing the set of circuit parameters for the quantum circuit, storing the set of model parameters for a surrogate model and/or storing uncertainties associated with the model parameters may comprise any suitable method of storing which allows these properties to be used in subsequent steps of the algorithm. For example, any relevant properties or parameters may be stored in volatile and/or non-volatile memory (e.g. classical computer memory).

Storing the set of circuit parameters for the quantum circuit for a first iteration of the optimisation may comprise determining and storing an initial estimate of the circuit parameters. The initial estimate may be determined based on prior knowledge and/or may be chosen randomly.

Storing the set of model parameters for the surrogate model for a first iteration of the optimisation may comprise determining and storing an initial estimate of the model parameters. The initial estimate may be determined based on prior knowledge and/or may be chosen randomly. In some examples, the initial estimate of the set of model parameters may represent a zero function. That is, the initial estimate of the set of model parameters may be determined such that no initial knowledge of the surrogate model (or the direction in parameter space towards a local extremum) is assumed.

Storing uncertainties associated with each of the stored set of model parameters may comprise determining and storing an initial estimate of the uncertainties. The initial estimate of the uncertainties may be determined to be relatively large. Determining that initial estimate of the uncertainties to be relatively large may reflect an initial lack of knowledge of the behaviour of the random variable of interest. During subsequent iterations of the optimisation, the uncertainties in the model parameters will reduce as knowledge is obtained through executing the quantum computer to generate estimates of the expectation value of the random variable of interest.

The quantum computer may comprise a plurality of physical qubits. The qubits may be used to generate a quantum state. The qubits may subsequently be manipulated to execute a quantum algorithm or circuit. The qubits may be measured and/or readout to return results of an algorithm or circuit executed on the quantum computer. The terms quantum computer and quantum information processor are used interchangeably herein.

Executing the quantum computer to determine estimates of the expectation value and the uncertainty of the estimates calculated by the quantum computer may comprise controlling the quantum computer based on the sampling sets of circuit parameters. Executing the quantum computer to determine estimates of the expectation value and the uncertainty of the estimate calculated by the quantum computer may comprise generating and transmitting instructions to the quantum computer. For example, the computer may be communicatively coupled to the quantum computer and/or a device configured to control the quantum computer (such as a controller apparatus which may include an interaction module) and may transmit instructions to the quantum computer and/or device configured to control the quantum computer. The instructions may, for example, comprise circuit parameters for use in the quantum computer. For example, executing the quantum computer for each of the plurality of sampling sets of circuit parameters may comprise transmitting at least the sampling sets of circuit parameters to the quantum computer and/or a device configured to control the quantum computer.

Executing the quantum computer for each of the plurality of sampling sets of circuit parameters may comprise: for each sampling set of circuit parameters, executing the quantum computer a plurality of times. For example, for a first sampling set of circuit parameters of the plurality of sampling sets, the quantum computer may be executed a plurality of times based on the first sampling set of circuit parameters. Similarly, for a second sampling set of circuit parameters of the plurality of sampling sets the quantum computer may be executed a plurality of times based on the second sampling set of circuit parameters and so on. For each of the sampling sets of circuit parameters the quantum computer may be executed a plurality of times based on that sampling set of circuit parameters. The quantum computer may therefore return a plurality of estimates of the expectation value of the random variable of interest for each set of sampling circuit parameters (i.e. a plurality of estimates for the first sampling set of circuit parameters, and a plurality of estimates for the second sampling set of circuit parameters).

Determining estimates of the expectation value for each of the plurality of sampling sets of input parameters may comprise: for each set of sampling circuit parameters of the plurality of sets, determining an average of the plurality of estimates returned by the quantum computer for that set of sampling circuit parameters. The average may comprise a mean of the plurality of estimates.

Determining an uncertainty of an estimate of the expectation value for each of the plurality of sampling sets of input parameters may comprise: for each set of sampling circuit parameters of the plurality of sets, determining a variance of the plurality of estimates returned by the quantum computer for that set of sampling circuit parameters and determining an uncertainty based on the determined variance.

The average, variance and/or uncertainty which is determined for each of the plurality of sampling sets of input parameters may be determined by the computer executing the method described above. For example, the quantum computer may return a plurality of estimates of the expectation value of the random variable of interest for a given sampling set of input parameters. The computer may receive the plurality of estimates and may determine an average (e.g. mean), variance and/or uncertainty based on the plurality of estimates. Alternatively, the average, variance and/or uncertainty determined for each of the plurality of sampling sets of input parameters may be determined by another computer system (such as a device configured to control the quantum computer, the quantum computer itself and/or another device) and received by the computer.

The iterative optimisation is performed until a criterion is met which indicates that the stored set of circuit parameters are approximate to circuit parameters representing an extremum of the expectation value of the random field. The criterion may, for example, comprise a magnitude of the descent or ascent along the determined gradient of the surrogate model (which may be referred to as a step size) being less than a threshold step size. The step size along the determined gradient of the surrogate model may be proportional to the magnitude of the determined gradient. A relatively small step size may therefore indicate that the magnitude of the determined gradient is relatively small and thus that circuit parameters are approximate to circuit parameters representing an extremum of the expectation vale of the random field. The criterion may comprise a magnitude of the determined gradient being less than a threshold gradient.

The criterion may additionally or alternatively comprise a number of iterations of the iterative optimisation process which have been performed reaching a threshold number of iterations.

In some examples, the criterion may comprise a plurality of different sub-criteria and the criterion may be considered to have been met if at least one of the plurality of different sub-criterion are met. For example, the criterion may be met if one or more of the following sub-criteria are met: the step size is less than a threshold step size, the magnitude of the gradient is less than a threshold gradient and/or the number of iterations reaches a threshold number of iterations.

The extremum of the expectation value of the random field may be estimated according to the circuit parameters as determined and updated in the most recent iteration of the optimisation process when the criterion is determined to have been met. For example, when the criterion is met, the stored circuit parameters may be determined to be extremum circuit parameters which represent a position in parameter space of the estimate of the expectation value of the random field.

The estimate of the extremum of the random field may be determined according to one or more estimates returned by the quantum computer when executed using the extremum circuit parameters. For example, the method may further comprise executing the quantum computer to determine an estimate of the expectation value for the extremum circuit parameters (the stored circuit parameters when the criterion is met). The quantum computer may be executed a plurality of times for the extremum circuit parameters. The estimate of the extremum of the expectation value of the random field may be determined as an average (e.g. a mean) of a plurality of estimates of the expectation value returned by the quantum computer. The average may be determined by the computer, the quantum computer and/or another computing device.

Determining a plurality of sampling sets of circuit parameters within a sampling radius of the stored set of circuit parameters may comprise randomly generating sets of circuit parameters within the sampling radius.

The sampling radius may decrease with increasing numbers of iterations of the optimisation algorithm. For example, during each iteration the sampling radius may be set to a smaller sampling radius than a sampling radius used during a previous iteration. As the optimisation algorithm proceeds through iterations it should converge towards an extremum of the expectation value of the random field. A smaller parameter space represented by a smaller sampling radius may therefore be chosen in order to execute the quantum computer to sample the random field within a smaller parameter space.

The sampling radius may represent a parameter space in which the random field can be well approximated by the surrogate model subject to suitably chosen model parameters.

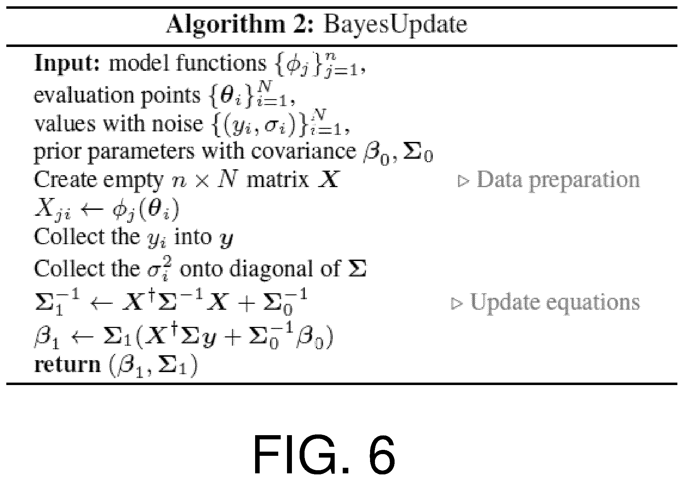

Determining an updated set of model parameters for the surrogate model in dependence on the estimates and uncertainties of the expectation values calculated for each of the sampling sets of circuit parameters, the stored model parameters and the stored uncertainties associated with the stored model parameters may comprise performing a Bayesian update of the model parameters. For example, determining an updated set of model parameters may comprise applying one or more steps of the algorithm outlined in Figure 6. Similarly determining interim uncertainties associated with the updated model parameters in dependence on the uncertainty of the expectation values calculated for each of the sampling set of circuit parameters and the stored uncertainties associated with the stored model parameters may comprise performing a Bayesian update of the model parameters. For example, determining interim uncertainties may comprise applying one or more steps of the algorithm outlined in Figure 6.

The extremum of the expectation value which is estimated may be a global extremum and/or a local extremum. The extremum of the expectation value which is estimated may be a minimum of the expectation value of the random field. For example, the extremum may be a global minimum of the expectation value of the random field. Additionally or alternatively, the extremum may be a local minimum of the expectation value of the random field. In some examples, the extremum of the expectation value which is estimated may be a maximum of the expectation value of the random field. For example, the extremum may be a global maximum of the expectation value of the random field. Additionally or alternatively, the extremum may be a local maximum of the expectation value of the random field.

Whether a descent or an ascent along the determined gradient of the surrogate model is used to determine an updated set of circuit parameters may depend on whether a minimum or a maximum (global or local) of the expectation value of the random field is being estimated. In examples in which a minimum of the expectation of the random field is estimated, a descent along the determined gradient of the surrogate model may be used to determine an updated set of circuit parameters. In examples in which a maximum of the expectation of the random field is estimated, an ascent along the determined gradient of the surrogate model may be used to determine an updated set of circuit parameters.

The descent or ascent along the gradient of the surrogate model used to determine the updated set of circuit parameters may have a step size (e.g. a magnitude) which is determined in dependence of the magnitude of the determined gradient. For example, the step size may increase with increases in the magnitude of the determined gradient. In some examples, the step size may be proportional to the magnitude of the gradient.

Determining updated uncertainties associated with the updated model parameters for the updated set of circuit parameters may comprise adding additional uncertainty to the determined interim uncertainties. The additional uncertainty may account for the ascent or descent taken along the determined gradient of the surrogate model to determine the updated set of circuit parameters. That is, the additional uncertainty may account for the movement in parameter space away from the sampling radius which was used to evaluate the expectation value of the random variable. The additional uncertainty may be dependent on the step size of the ascent or descent taken along the determined gradient of the surrogate model to determine the updated set of circuit parameters. For example, the additional uncertainty may increase with increases in the step size of the ascent or descent. In some examples, the additional uncertainty may be proportional to the squared step size of the descent or ascent.

In some examples, the random variable of interest may comprise an energy of a system. The method of estimating an extremum of an expectation value of a random field may comprise estimating a minimum of an energy of a system which may be referred to as a ground state energy. The system may comprise a physical system whose energy state is simulated by the quantum computer. That is, the quantum computer may be configured to simulate the energy of a physical system for a set of circuit parameters. The method may form part of a variational quantum eigensolver algorithm to compute the ground state energy of a Hamiltonian. The Hamiltonian may represent a physical system such as a quantum mechanical system.

The quantum computer may be configured to estimate the energy of a state produced by the quantum circuit with respect to a given quantum Hamiltonian for a set of circuit parameters.

The expectation value of the random variable estimated by the quantum computer may comprise the energy of a state produced by the quantum circuit for a set of circuit parameters.

The quantum computer may be configured to simulate a physical system, which may comprise a quantum mechanical system.

The method may comprise a method of estimating a ground state energy of the physical system.

The surrogate model may comprise a quadratic model.

The stored model parameters may each be represented by a multivariate gaussian distribution.

The multivariate gaussian distributions may each be characterised by a mean and a variance. The stored model parameters may each comprise the mean of the respective multivariate gaussian distribution which represents the stored model parameter. The uncertainties associated with each of the stored set of model parameters may at least be dependent on the variance of the respective multivariate gaussian distribution which represents the stored model parameter.

The determining an updated set of model parameters for the surrogate model and determining interim uncertainties associated with the updated model parameters may comprise performing a Bayesian update of gaussian distributions representing the stored model parameters.

The stored set of model parameters and associated uncertainties may represent a prior. The mean and variance of the expectation values calculated for each of the sampling sets of circuit parameters may represent new data for performing the Bayesian update.

The step size of the ascent or descent along the gradient of the surrogate model used to determine the updated set of circuit parameters may be proportional to the magnitude of the determined gradient.

Determining updated uncertainties associated with the updated model parameters for the updated set of circuit parameters may comprise adding additional uncertainty to the determined interim uncertainties in dependence on the step size of the descent or ascent along the gradient of the surrogate model used to determine the updated set of circuit parameters.

The additional uncertainty may be proportional to the squared step size of the descent or ascent along the gradient of the surrogate model used to determine the updated set of circuit parameters.

Performing an iterative optimisation to update the stored set of circuit parameters until a criterion is met indicating that the stored set of circuit parameters are approximate to circuit parameters representing an extremum of the expectation value of the random field of interest may comprise performing the iterative optimisation process until the step size of the descent or ascent along the gradient of the surrogate model used to determine the updated set of circuit parameters is less than a threshold step size.

Performing an iterative optimisation to update the stored set of circuit parameters until a criterion is met indicating that the stored set of circuit parameters are approximate to circuit parameters representing an extremum of the expectation value of the random field of interest may comprise performing the iterative optimisation process until the number of iterations performed reaches a threshold number of iterations.

According to a second aspect of the disclosure there is provided a computer readable medium having instructions stored thereon which, when read by a processor of a computing apparatus, cause the computing apparatus to perform a method according to the first aspect.

According to a third aspect of the disclosure there is provided a computing apparatus comprising: one or more memories; and one or more classical processors configured to execute instructions stored in the one or more memory units to perform a method according to the first aspect.

The computing apparatus may further comprise the quantum computer configured to estimate an expectation value of the random variable of interest for a set of circuit parameters.

The computing apparatus may further comprise interaction means for interacting with the quantum computer.

According to a first example of the disclosure, there is provided a method of estimating an extremum of an expectation value of a random field, the method executed on a computer and utilising a computing system, wherein the computing system is configured to estimate an expectation value, and an uncertainty of that estimate, of a random variable of interest for a set of input parameters, wherein the method comprises: storing a set of input parameters; storing a set of model parameters for a surrogate model, wherein the surrogate model is configured, based on the stored set of model parameters, to approximate the expectation value of random variable of interest produced by the computing system for input parameters in the vicinity of the stored set of input parameters; storing uncertainties associated with each of the stored set of model parameters; performing an iterative optimisation to update the stored set of input parameters until a criterion is met indicating that the stored set of input parameters are approximate to input parameters representing an extremum of the expectation value of the random field, wherein the iterative optimisation comprises a plurality of iterations to update the stored set of input parameters, stored set of model parameters and stored uncertainties associated with the model parameters, wherein each iteration comprises: determining a plurality of sampling sets of input parameters within a sampling radius of the stored set of input parameters; for each of the plurality of sampling sets of input parameters, executing the computing system to receive estimates of the expectation value and the uncertainty associated with that estimate calculated by the computing system for each of the plurality of sampling sets of input parameters; determining an updated set of model parameters for the surrogate model in dependence on the estimates and uncertainties of the expectation values calculated for each of the sampling sets of input parameters, the stored model parameters and the stored uncertainties associated with the stored model parameters; determining interim uncertainties associated with the updated model parameters in dependence on the variance of the expectation values calculated for each of the sampling sets of input parameters and the stored uncertainties associated with the stored model parameters; determining a gradient of the surrogate model at the stored input parameters when parameterised by the updated set of model parameters; determining an updated set of input parameters in dependence on the stored set of input parameters and the determined gradient of the surrogate model, wherein the updated set of input parameters represents a descent or ascent along the determined gradient of the surrogate model, relative to the stored set of input parameters; determining updated uncertainties associated with the updated model parameters for the updated set of input parameters, wherein the updated uncertainties are determined in dependence on the determined interim uncertainties and a step size of the descent or ascent along the gradient of the surrogate model used to determine the updated set of input parameters; updating the stored input parameters to correspond to the determined updated set of input parameters; updating the stored set of model parameters to correspond to the determined updated set of model parameters; and updating the stored uncertainties associated with the model parameters to correspond to the determined updated uncertainties.

The computing system may comprise a quantum computer.

The quantum computer may comprise a quantum circuit parameterised by a set of circuit parameters, and configured to estimate the energy of a state produced by the quantum circuit with respect to a given quantum Hamiltonian for a set of circuit parameters, and wherein the set of input parameters comprise the circuit parameters of the quantum circuit, and wherein the expectation value of a random variable estimated by the quantum computer comprises the energy of a state produced by the quantum circuit for a set of circuit parameters.

The quantum computer may be configured to simulate a physical system, which may comprise a quantum mechanical system.

The method may comprise a method of estimating a ground state energy of the physical system.

The surrogate model may comprise a quadratic model.

The stored model parameters may each be represented by a multivariate gaussian distribution.

The determining an updated set of model parameters for the surrogate model and determining interim uncertainties associated with the updated model parameters may comprise performing a Bayesian update of gaussian distributions representing the stored model parameters.

The stored set of model parameters and associated uncertainties may represent a prior and the mean and variance of the expectation values calculated for each of the sampling sets of input parameters may represent new data for performing the Bayesian update.

The step size of the ascent or descent along the gradient of the surrogate model used to determine the updated set of input parameters may be proportional to the magnitude of the determined gradient.

Determining updated uncertainties associated with the updated model parameters for the updated set of input parameters may comprise adding additional uncertainty to the determined interim uncertainties in dependence on the step size of the descent or ascent along the gradient of the surrogate model used to determine the updated set of input parameters.

The additional uncertainty may be proportional to the squared step size of the descent or ascent along the gradient of the surrogate model used to determine the updated set of input parameters.

Performing an iterative optimisation to update the stored set of input parameters until a criterion is met indicating that the stored set of input parameters are approximate to input parameters representing an extremum of the expectation value of the random field of interest may comprise performing the iterative optimisation process until the step size of the descent or ascent along the gradient of the surrogate model used to determine the updated set of input parameters is less than a threshold step size.

Performing an iterative optimisation to update the stored set of input parameters until a criterion is met indicating that the stored set of input parameters are approximate to input parameters representing an extremum of the expectation value of the random field of interest may comprise performing the iterative optimisation process until the number of iterations performed reaches a threshold number of iterations.

According to a second example of the disclosure there is provided a computer readable medium having instructions stored thereon which, when read by a processor of a computing apparatus, cause the computing apparatus to perform a method according to the first aspect.

According to a third example of the disclosure there is provided a computing apparatus comprising: one or more memories; and one or more classical processors configured to execute instructions stored in the one or more memory units to perform a method according to the first aspect.

The computing apparatus may further comprise the computing system configured to estimate an expectation value of the random variable of interest for a set of input parameters.

The computing apparatus may further comprise interaction means for interacting with the computing system.

The computing system may comprise a quantum computer.

As will be appreciated by one skilled in the art, the present invention may be embodied as a system, method, or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present invention may take the form of a computer program product embodied in any one or more computer readable medium(s) having computer usable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, device, or any suitable combination of the foregoing. More specific examples (a non-exhaustive list) of the computer readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in a baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Computer code embodied on a computer readable medium may be transmitted using any appropriate medium, including but not limited to wireless, wireline, optical fiber cable, radio frequency (RF), etc., or any suitable combination thereof.

Computer program code for carrying out operations for aspects of the present invention may be written in any combination of one or more programming languages, including an object oriented programming language such as Java™, Smalltalk™, C++, or the like, and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Many modifications and other embodiments of the inventions set out herein will come to mind to a person skilled in the art to which these inventions pertain in light of the teachings presented herein. Therefore, it will be understood that the disclosure herein is not to be limited to the specific embodiments disclosed herein. Moreover, although the description provided herein provides example embodiments in the context of certain combinations of elements, steps and/or functions may be provided by alternative embodiments without departing from the scope of the invention.

**Brief Description Of The Drawings**

Embodiments of the invention are further described hereinafter with reference to the accompanying drawings, in which:

Figure 1 illustrates a communication system including a quantum information processor;
Figure 2 shows a schematic of a computing device / computing apparatus;
Figure 3 illustrates a controller apparatus and quantum information processor;
Figure 4 illustrates a comparison of an algorithm of the present disclosure and a known algorithm;
Figure 5 illustrates pseudo code for executing an algorithm of the present disclosure; and
Figure 6 illustrates pseudo code for executing an aspect of an algorithm of the present disclosure.

Throughout the description and the drawings, like reference numerals refer to like parts.

Detailed Description

Quantum information processing focuses on information processing and computing based on quantum mechanics. While current digital computers encode data in binary digits (bits), quantum computers are not limited to two states. They encode information as quantum bits, or qubits, which can exist in superposition. A qubit is a unit of quantum information. Qubits may be implemented with atoms, ions, photons or electrons (for example) and suitable control devices for example that work together to act as computer memory and a processor. In what follows, the terms quantum information processor and quantum computer have been used interchangeably. It is to be understood that a quantum information processor comprises a plurality of qubits and the apparatus required to maintain the qubits in a superposition state. In what follows, the term "controller apparatus" has been used to describe classical computing apparatus having, for example, classical processing capabilities and the ability to control interaction means for interacting with the qubits of the quantum information processor. In this way, a controller apparatus may control input to and receive output from the quantum information processor.

The quantum computing architecture, and accordingly the types of interaction means required to interact with the quantum information processor, do not matter for the purposes of the following discussion.

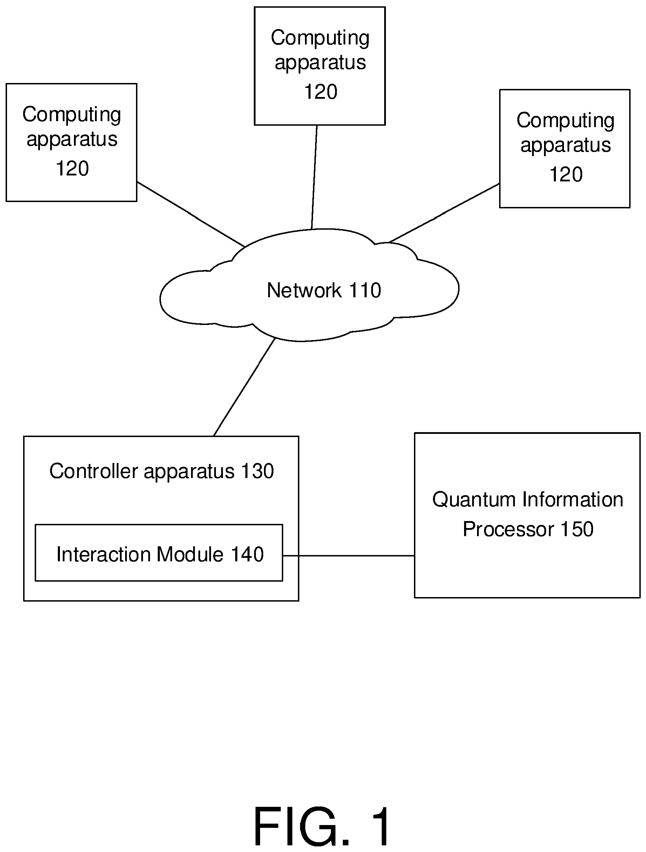

FIG. 1 shows a computer system 100 in accordance with the present disclosure. The computer system 100 comprises one or more computing apparatuses 120, a network 110, a controller apparatus 130 and a quantum information processor 150.

The one or more computer apparatuses 120 and the controller apparatus 130 can communicate with each other over the network 110. The network 110 may be any known type of computer network, enabling wired or wireless communication between computer apparatus 120 and the controller apparatus 130, and could be for example, a Local Area Network (LAN), a Wide Area Network (WAN), or the Internet.

The computer apparatus 120 is able to generate or store locally, or receive and transmit over the network 110, a whole or part of a control sequence for performing qubit operations (quantum operations) on the quantum information processor 150.

The controller apparatus 130 is able to generate or receive from computing apparatus 120 a control sequence for performing operations on the quantum information processor 150. The controller apparatus 130 is able to interact directly with the quantum computer 150 via interaction module 140 according to a control sequence.

The quantum information processor 150 can be any device which is able to store and manipulate qubits. The quantum information processor 150 may have any type of architecture, and may generate qubits using any known method, including, but not limited to the following methods: nuclear magnetic resonance, ion traps, superconductors, quantum dots, electrons on liquid helium, solid-state spin spectroscopy, cavity QED. The quantum information processor 150 may process logical qubits encoded on multiple physical qubits using a quantum error correcting code. The quantum information processor 150 may generate and manipulate qubits according to a control sequence applied by the controller apparatus 130.

The skilled person would appreciate that other set-ups to that shown in FIG. 1 may be suitable. For example, the controller apparatus 130 and the quantum information processor 150 may be combined in one unit. The computing apparatus 120 may not be necessary - for example, the controller apparatus 130 may itself perform methods as described herein.

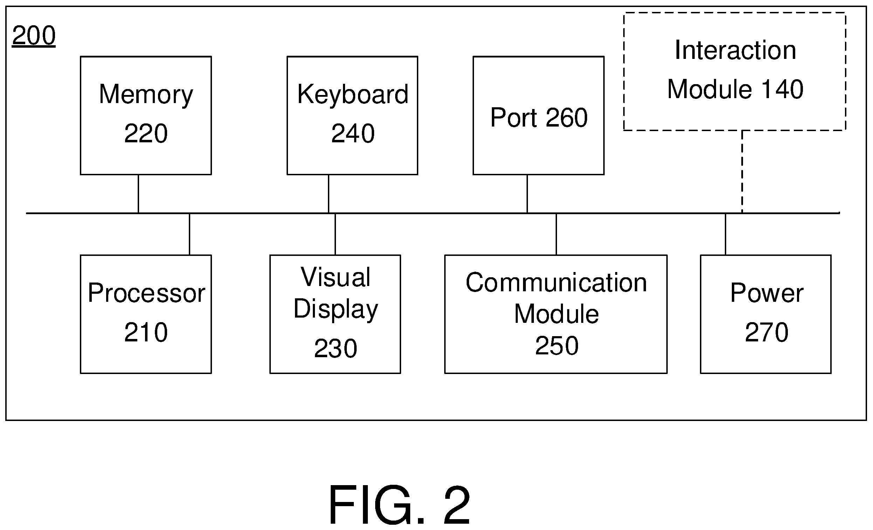

FIG. 2 is a block diagram of a computing apparatus 200. For example, computing apparatus 200 may comprise a computing device, a server, a mobile or portable computer and so on. Computing apparatus 200 may be distributed across multiple connected devices. Computing apparatus 200 may be suitable for use as computing apparatus 120 of FIG. 1. Computing apparatus 200 may be suitable for use as controller apparatus 130 of FIG. 1. Other architectures to that shown in FIG. 2 may be used as will be appreciated by the skilled person.

Referring to the figure, computing apparatus 200 includes one or more classical processors 210, one or more memories 220, a number of optional user interfaces such as visual display 230 and virtual or physical keyboard 240, a communications module 250, and optionally a port 260 and optionally a power source 270. Each of components 210, 220, 230, 240, 250, 260, and 270 are interconnected using various busses. Processor 210 can process instructions for execution within the computing apparatus 200, including instructions stored in memory 220, received via communications module 250, or via port 260.

Memory 220 is for storing data within computing apparatus 200. The one or more memories 220 may include a volatile memory unit or units. The one or more memories may include a non-volatile memory unit or units. The one or more memories 220 may also be another form of computer-readable medium, such as a magnetic or optical disk. One or more memories 220 may provide mass storage for the computing apparatus 200. Instructions for performing a method as described herein may be stored within the one or more memories 220. For example, the memory 220 may contain instructions for establishing a training set as described herein and may contain instructions for mitigating errors caused by noise in an algorithm implemented using the quantum information processor 150.

The apparatus 200 includes a number of user interfaces including visualising means such as a visual display 230 and a virtual or dedicated user input device such as keyboard 240.

The communications module 250 is suitable for sending and receiving communications between processor 210 and remote systems. For example, communications module 250 may be used to send and receive communications via a communication network 110 such as the Internet.

The port 260 is suitable for receiving, for example, a non-transitory computer readable medium containing instructions to be processed by the processor 210.

The processor 210 is configured to receive data, access the memory 220, and to act upon instructions received either from said memory 220 or a computer-readable storage medium connected to port 260, from communications module 250 or from user input device 240.

In some examples, computing apparatus may include interaction module 140. The interaction module 140 is suitable for interacting with a quantum information processor / quantum computer 150. The interaction module 140 may be used to generate an initial quantum state on the quantum information processor 150, and may be used to manipulate the qubits of the quantum information processor / quantum computer. The interaction module 140 may be used to read out a state of the quantum information processor 150, for example a value of an observable. The form and characteristics of the interaction means 140 depends on the type of quantum information processor 150 being used to process quantum information, and examples of quantum information processors are described below. For example, if the quantum information processor 150 comprises an ion trap quantum computer then the interaction means 140 may comprise one or more lasers for preparing an initial quantum state via e.g. optical pumping, and may comprise apparatus for manipulating magnetic dipole transitions or stimulated Raman transitions or apparatus for manipulating electric quadrupole transitions, in order to manipulate the quantum state. For example, if the quantum computer comprises a superconducting quantum computer then the interaction means 140 may comprise circuitry to apply a voltage across a particular point in the superconducting circuit or apparatus for coordinating microwave pulses applied to the superconducting quantum computer. The quantum information processor 150 may comprise any type of quantum information processor and the corresponding interaction means 140 may comprise any means suitable for interaction with the qubits of the quantum information processor 150.

The processor 210 may be configured to control the interaction module 140 according to a control sequence. The processor 210 may determine the control sequence locally according to any method of determining a control sequence described herein, or may receive the control sequence from an external computer apparatus 120, or via a computer-readable medium with the control sequence stored thereon being connected with the port 260.

According to an example, a user of computing apparatus 120 may seek to execute a quantum circuit on quantum information processor 150. The computing apparatus 120 may determine a control sequence for performance on a quantum information processor / quantum computer 150. For example, the computing apparatus 120 may determine a control sequence for execution on the quantum computer 150 such the quantum computer returns an estimate of an expectation value of a random variable of interest. The control sequence may comprise or at least may be dependent on a set of circuit parameters to be evaluated as part of an optimisation algorithm as described herein. The computing apparatus 120 may communicate via network 110 to controller apparatus 130 which may then control the execution of the quantum circuit on the quantum information processor 150 via interaction means 140. The results may then be communicated back to the computing apparatus 120 for provision to the user and/or an algorithm executed by the computing apparatus 130. Of course, the skilled person would appreciate that the external computing apparatus 120 is not necessary - for example, the user may interact directly with the control apparatus 130.

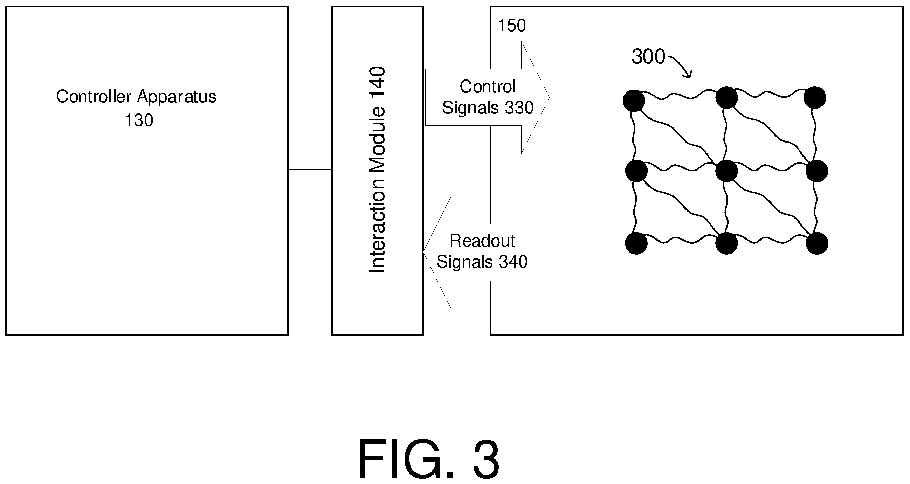

FIG. 3 shows a controller apparatus 130 and quantum information processor 150 in more detail. The controller apparatus 130 is configured to control the quantum information processor 150 via interaction module 140. In FIG. 3, the interaction module 140 is shown as external to the controller apparatus 130. The interaction module 140 may be internal to the controller apparatus 130 (such as in FIG. 2) or may be external to the controller apparatus 130.

The quantum information processor 150 comprises a plurality of qubits 300. In FIG. 3 possible interactions between qubits are represented by the wavy lines. The skilled person would appreciate that the quantum information processor 150 of FIG. 3 is illustrative only. The quantum information processor may comprise more or fewer qubits and the configuration of the qubits may be any suitable configuration. The controller apparatus 130 is configured to use the interaction module 140 to send control signals 330 to control the qubits 300 of the quantum information processor 150. The controller apparatus 130 is further configured to receive readout signals 340 from measurements of the quantum information processor 150.

One of the most important application areas of near-term quantum computers is predicted to be simulating quantum-mechanical systems (although the methods described herein are applicable to other problems also). Quantum computers could approximate values of physical quantities which are hard to obtain classically.

In the following discussion the focus is on an optimisation algorithm referred to as BayesMGD. The BayesMGD optimisation algorithm is introduced in the context of a Variational Quantum Eigensolver (VQE) optimisation procedure. However, the method described herein may find application in other optimisation problems. In general, the optimisation algorithms presented herein may be used to estimate an extremum of an expectation value of any random field of interest.

The optimisation algorithm may be executed on a classical computer. Part of the optimisation algorithm may comprise controlling a quantum computer to return estimates of expectation values of a random variable of interest for a set of circuit parameters. Features of the BayesMGD algorithm are described below by way of example of a method of estimating an extremum of an expectation value of a random field as presented herein. It will be appreciated that modifications may be made to the BayesMGD algorithm presented below without departing from the scope of the invention.

## I. THE BAYESMGD ALGORITHM

The main idea of Model Gradient Descent (MGD), the algorithm that inspired BayesMGD, is to sample points and function values $(\theta_i, y_i)$ in a trust region around $\theta$, fit a quadratic surrogate model using linear least squares to all data available in the trust region and use this surrogate model to estimate the gradient. Our algorithm is designed to improve on these ideas via Bayesian analysis. We perform iterative, Bayesian updates on the surrogate model and utilise the sample variance to estimate the uncertainty in the fit parameters and surrogate model evaluations. Utilising the sample variance to estimate the uncertainty of function evaluations allows for more accurate surrogate models and estimating the uncertainty in the surrogate model evaluations allows us to put error bars on the predictions.

We are given a random field $f(\theta)$ (that is, a collection of random variables parameterised by $\theta$) and want to find the parameters $\theta$ such that the expectation value $\mu(\boldsymbol{\theta}) := \mathbb{E}[f(\boldsymbol{\theta})]$ is minimal. Alternatively, equivalent methods to those described herein may be used to find the parameters $\theta$ such that the expectation value $\mu(\boldsymbol{\theta}) := \mathbb{E}[f(\boldsymbol{\theta})]$ is maximal. The parameters $\theta$ may be referred to herein as circuit parameters of a quantum computer configured to estimate an expectation value of the random field $f(\theta)$ for the circuit parameters $\theta$. We assume that at each $\theta$ the variance of the random variable $f(\theta)$ is finite, such that the central limit theorem is applicable to sample means of $f(\theta)$. Since we are always interested in situations where we take many samples at a given $\theta$ and approximate $\mu(\theta)$ by their mean, we can equivalently assume - and will from now on - that $f(\theta)$ is normally distributed at each $\theta$ with known variance $\sigma^2(\theta)$. Furthermore, the mean function $\mu(\theta)$ is assumed to be smooth and hence it is locally always well described by a quadratic surrogate model

$$f_s(\boldsymbol{\theta}; \boldsymbol{\beta}) = \beta_0 + \sum_{j=1}^{n} \beta_j \theta_j + \sum_{j<k}^{n} \beta_{jk} \theta_j \theta_k$$

$$(1)$$

which is linear in its model parameters $\beta_0, \beta_j$ and $\beta_{jk}$.

In each iteration m we randomly pick $k$ sampling points $\theta^{(i)}$ (sampling sets of circuit parameters) in a $\delta_m$-m-ball (within a sampling radius) around $\theta_m$ (stored circuit parameters for that iteration) and get noisy function evaluations $y_i \sim \mathcal{N}\left(\mu\left(\boldsymbol{\theta}^{(i)}\right), \sigma_i^2\right)$ with approximately known uncertainty $\sigma_i$. The sampling radius scales as $\delta_m = \delta/m^\xi$ with a sample radius decay exponent $\xi$ and initial sampling radius $\delta$. This new data $\{\theta^{(2)}\}$ and $\{y_i, \sigma_i\}$ is used to update our belief $p_{m|m-1}(\beta)$ about the parameters $\beta$ at the $m$-th step given the data up until step $m-1$ using Bayes' rule to a new belief $p_{m|m}$ incorporating the new data from the $m$-th step:

$$
\begin{aligned}
p_{m|m}(\boldsymbol{\beta}) &= P\left(\boldsymbol{\beta} \mid \{\boldsymbol{\theta}^{(i)}\}, \{y_i, \sigma_i\}\right) \\
&\propto P\left(\{y_i, \sigma_i\} \mid \{\boldsymbol{\theta}^{(i)}\}, \boldsymbol{\beta}\right) p_{m|m-1}(\boldsymbol{\beta}) \\
&= \prod_{i=1}^{k} \mathcal{N}\left(y_i; f_s\left(\boldsymbol{\theta}^{(i)}; \boldsymbol{\beta}\right), \sigma_i\right) \\
&\quad \times \mathcal{N}\left(\boldsymbol{\beta}; \boldsymbol{\beta}_{m|m-1}, \boldsymbol{\Sigma}_{m|m-1}\right) \\
&=: \mathcal{N}\left(\boldsymbol{\beta}; \boldsymbol{\beta}_{m|m}, \boldsymbol{\Sigma}_{m|m}\right)
\end{aligned}
$$

$$(2)$$

where in the last line we use the fact that the product of gaussians is again a gaussian to implicitly define $\beta_{m|m}$ and $\Sigma_{m|m}$. $\beta_{m|m}$ may be referred to herein as updated model parameters for the current iteration. $\Sigma_{m|m}$ may be referred to herein as interim uncertainties associated with the updated model parameters $\beta_{m|m}$.

We defer the detailed derivation of $\beta_{m|m}$, $\Sigma_{m|m}$ in terms of the prior $\beta_{m|m-1}$, $\Sigma_{m|m-1}$ and new data to Section IIIC, together with a discussion of the relation of BayesMGD and Kalman filters and pseudo-code for the algorithm.

Since the surrogate model $f_s(\theta; \beta)$ is linear in the model parameters $\beta$ the usual uncertainty propagation formulas are exact and we know that

$$f_s(\boldsymbol{\theta}_m; \boldsymbol{\beta}) \sim \mathcal{N}\left(f_s(\boldsymbol{\theta}_m; \boldsymbol{\beta}_{m|m}), \left(\nabla_{\boldsymbol{\beta}} f_s\right)^{\dagger} \boldsymbol{\Sigma}_{m|m} \nabla_{\boldsymbol{\beta}} f_s\right)$$

$$(3)$$

where $\nabla_{\beta} f_s$ denotes the gradient of $f_s$ with respect to $\beta$ evaluated at $(\theta_m; \beta_{m|m})$. Similarly, we also obtain a distribution over the gradient $\nabla_{\theta} f_s(\theta_m, \beta)$. The maximum a posteriori estimate for the gradient is simply obtained by plugging the most likely value $\beta_m$ for the model parameters (the stored model parameters for the current iteration) $\beta$ into the gradient of the surrogate model:

$$g(\boldsymbol{\theta}_m) = \nabla_{\boldsymbol{\theta}} f_s(\boldsymbol{\theta}; \boldsymbol{\beta}_{m|m})$$

$$(4)$$

With this estimate of the gradient we perform a gradient descent step

$$\boldsymbol{\theta}_{m+1} = \boldsymbol{\theta}_m - \gamma_m g(\boldsymbol{\theta}_m)$$

$$(5)$$

Here, $\gamma_m = \gamma/(m + A)^\alpha$ is the gradient step width with a stability constant $A$, decay exponent $\alpha$ and initial step width $\gamma$. In alternative examples in which a maximum of an expectation value of a random field is estimated, an equivalent gradient ascent step is performed.

Changing $\theta$ does not change the local surrogate model, but it adds uncertainty proportional to the step width to it. Hence the belief at $\theta_{m+1}$ without data at that point is described by

$$\boldsymbol{\beta}_{m+1|m} = \boldsymbol{\beta}_{m|m}$$
$$\boldsymbol{\Sigma}_{m+1|m} = \boldsymbol{\Sigma}_{m|m} + \frac{\gamma_m^2 |g(\boldsymbol{\theta}_m)|^2}{l^2} \mathbb{1}$$

$$(6)$$

$\Sigma_{m+1|m}$ may be referred to herein as updated uncertainties associated with the updated model parameters $\beta_{m|m}$. As can be seen from equation (6) the updated uncertainties $\Sigma_{m+1|m}$ are dependent on the interim uncertainties $\Sigma_{m|m}$ and the step size $\gamma_m$.

Here, $l$ is the length scale on which our quadratic model becomes invalid. The choice of adding uncertainty proportional to the squared step width is heuristic so far, but can be motivated using gaussian processes. A gaussian process is a probability distribution over functions that allows one, among other things, to compute the probability distribution of function value, gradient and hessian at some point $\theta_{m+1}$ conditioned on the function value, gradient and hessian available at some other point $\theta_m$. For a gaussian process with a squared exponential kernel and small $|\theta_m - \theta_{m+1}|$ the uncertainty about function value, gradient and hessian at $\theta_{m+1}$ grows with the squared distance to $\theta_m$. The exact rate at which the uncertainty for each of the entries of $\beta_m$ grows requires in-depth analysis that we replaced with uniform scaling in all entries.

## II. EXPERIMENTAL COMPARISON

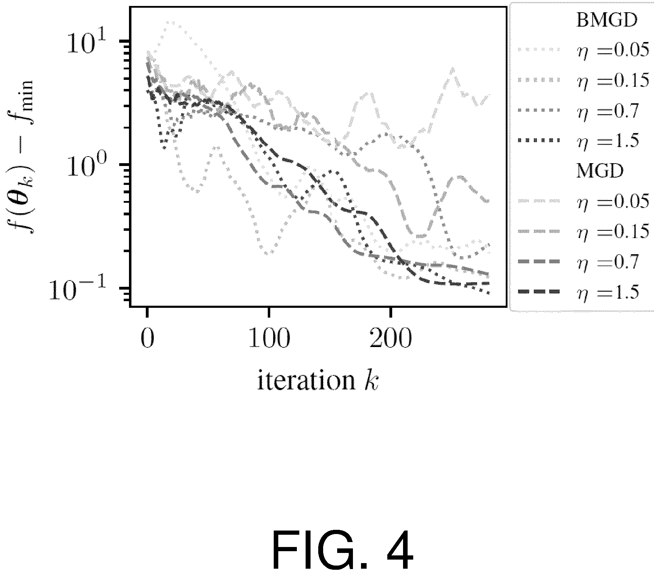

FIG. 4. shows a comparison of BayesMGD and MGD with a simulated cost function with 18 parameters. As a cost function we chose the cost functions from [6] on $2 \times 6$ qubits with 3 layers. The number of shots per evaluation was scaled with $n_{\text{shots}} \sim \eta^{-1}$, making the number of shots per optimiser iteration constant. For clarity, we show only the exact function value at the current $\theta$ instead of the noisy evaluations at the sample points. These are typically higher and far more spread out.

We used classical numerical simulation to compare the performance of BayesMGD and MGD, for VQE used to find the ground state of the antiferromagnetic Heisenberg model on the kagome lattice [6] with 12 qubits and 18 parameters. We found that for $\eta := \frac{k}{(n+1)(n+2)/2} \geq 1$ the performance of BayesMGD and MGD is comparable, while for $\eta < 1$ BayesMGD often outperforms MGD. $\eta$ is here defined as the ratio between the number $k$ of evaluation points taken in each iteration and the number $(n + 1)(n + 2)/2$ of evaluation points necessary for a fully determined quadratic fit. Hence $\eta < 1$ corresponds to an underdetermined quadratic fit, where good usage of prior information is especially important. These situations are shown in Fig. 4, where for $\eta = 0.7$ and 1.5. BayesMGD and MGD perform similarly, while for $\eta = 0.15$ and for $\eta = 0.15$ BayesMGD clearly outperforms MGD. Note that in the given case for $\eta = 0.05$ the number of sample points is smaller than the number of parameters, i.e. even a linear fit is not fully specified.

## III. FURTHER DETAILS

In section I, in particular Eq. (2), an explicit formula for $\beta_m$ and $\Sigma_m$ is still missing. We give these explicit formulas here together with their derivation and also present pseudocode for the BayesMGD algorithm and show how it is related to Kalman filters.

### A. The Bayesian update step

We make three main assumptions in our design of the BayesMGD algorithm:

1. For all $\theta'$ near $\theta_{m-1}$ the probability of observing some value y' is given by $p(y' \mid \theta', \beta) = \mathcal{N}(f_s(\theta'; \beta))$ where the surrogate model can be written as $f_s(\theta'; \beta) = \sum_j^n \beta_j \phi_j(\theta)$ with model functions $\phi_j(\theta)$ that can be read off Eq. 1.

2. In the $m$-th iteration, before observing new data our belief about the model parameters is a multivariate gaussian $p_{m|m-1}(\beta) = \mathcal{N}(\beta_{m|m-1}, \Sigma_{m|m-1})$

3. When making a gradient descent step, we lose certainty about the model parameters $\beta$ proportional to the step width s, but our belief does not change. I.e. making the gradient descent step sends

$$\Sigma_{m|m+1} = \Sigma_{m|m} + \frac{s^2}{l^2} \mathbb{1}$$

and $\beta_{m+1|m} = \beta_{m|m}$.

Assumptions 1 and 2 imply that after observing new data $\{y_i, \sigma_i\}$ at points $\{\theta^{(i)}\}$ we can use Bayes' theorem (compare Eq. 2) to compute the posterior of $\beta$,

$$\begin{aligned} p_{m|m}(\boldsymbol{\beta}) \propto \quad &\propto P\big(\{y_i, \sigma_i\} \mid \{\boldsymbol{\theta}^{(i)}\}, \boldsymbol{\beta}\big) p_{m|m-1}(\boldsymbol{\beta}) \\ = \quad &\prod_{i=1}^{k} \mathcal{N}\big(y_i; f_s(\boldsymbol{\theta}^{(i)}; \boldsymbol{\beta}), \sigma_i\big) \\ &\times \mathcal{N}\big(\boldsymbol{\beta}; \boldsymbol{\beta}_{m|m-1}, \boldsymbol{\Sigma}_{m|m-1}\big) \\ = \quad &\mathcal{N}\big(\boldsymbol{\beta}; \boldsymbol{\beta}_{m|m}, \boldsymbol{\Sigma}_{m|m}\big) \end{aligned}$$

$$(7)$$

Defining the design matrix

$$X = \begin{pmatrix} \phi_1\big(\boldsymbol{\theta}^{(1)}\big) & \cdots & \phi_n\big(\boldsymbol{\theta}^{(1)}\big) \\ \vdots & & \vdots \\ \phi_1\big(\boldsymbol{\theta}^{(k)}\big) & \cdots & \phi_n\big(\boldsymbol{\theta}^{(k)}\big) \end{pmatrix}$$

$$(8)$$

measurement noise matrix

$$\mathbf{\Sigma} = \begin{pmatrix} \sigma_1^2 & & \\ & \ddots & \\ & & \sigma_k^2 \end{pmatrix}$$

(9)

and a measurement outcome vector

$$\mathbf{y} = (y_1, \cdots, y_k)^\dagger$$

(10)

and plugging these into the expressions for gaussian distributions yields

$$\begin{aligned} \log p_{m|m}(\boldsymbol{\beta}) = & -\frac{1}{2}(\mathbf{y} - \mathbf{X}\boldsymbol{\beta})^\dagger \mathbf{\Sigma}^{-1}(\mathbf{y} - \mathbf{X}\boldsymbol{\beta}) \\ & -\frac{1}{2}(\boldsymbol{\beta} - \boldsymbol{\beta}_{m|m-1})^\dagger \mathbf{\Sigma}_{m|m-1}^{-1}(\boldsymbol{\beta} - \boldsymbol{\beta}_{m|m-1}) \\ & +\text{const} \end{aligned}$$

(11)

where the normalisation factors were absorbed into "const". The product of two gaussian distributions is again a gaussian distribution. So we know that

$$\log p_{m|m}(\boldsymbol{\beta}) = -\frac{1}{2}(\boldsymbol{\beta} - \boldsymbol{\beta}_{m|m})^\dagger \mathbf{\Sigma}_{m|m}^{-1}(\boldsymbol{\beta} - \boldsymbol{\beta}_{m|m}) + \text{const}$$

(12)

for some $\beta_{m|m}$ and $\Sigma_{m|m}$. Comparing terms in the last two equations then gives

$$\begin{aligned} \mathbf{\Sigma}_{m|m}^{-1} &= \mathbf{X}^\dagger \mathbf{\Sigma}^{-1}\mathbf{X} + \mathbf{\Sigma}_{m|m-1}^{-1} \\ \boldsymbol{\beta}_{m|m} &= \mathbf{\Sigma}_{m|m}\left(\mathbf{X}^\dagger \mathbf{\Sigma}^{-1}\mathbf{y} + \mathbf{\Sigma}_{m|m-1}^{-1}\boldsymbol{\beta}_{m|m-1}\right) \end{aligned}$$

(13)

## B. Psuedocode for BayesMGD

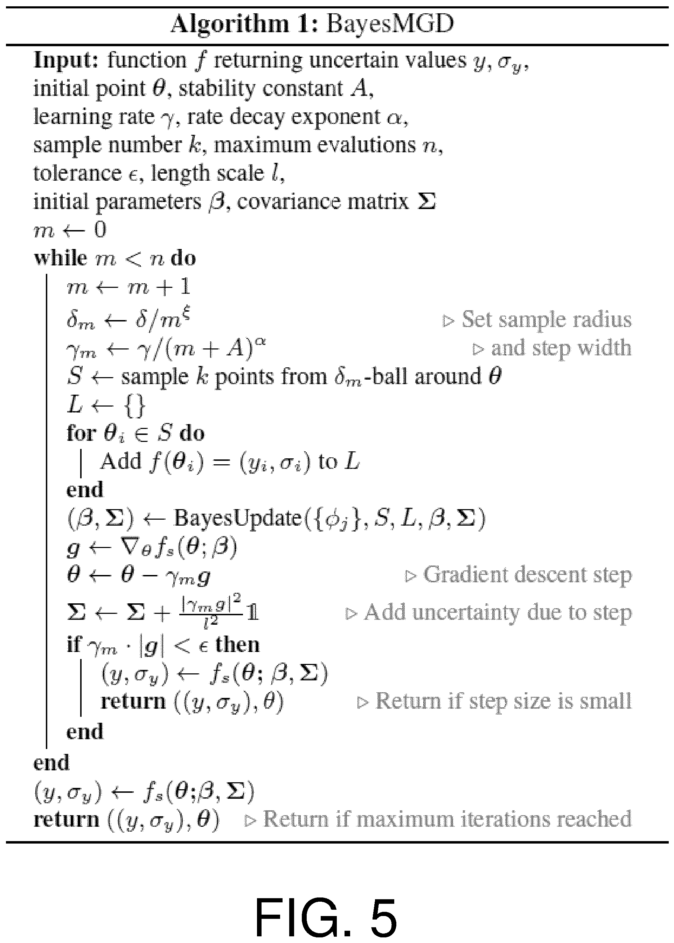

In Fig. 5 and Fig. 6 we give pseudocode for the BayesMGD algorithm and the Bayesian update step. Throughout we assume a quadratic model function, as in Eq. 1, with the corresponding model functions $\phi_j(\theta)$. For simplicity of notation, we also implicitly lift any function that is passed a variable together with the uncertainty of the variable to a version that returns the function value together with its uncertainty computed using gaussian error propagation.

## C. Relation between BayesMGD and Kalman filters

The Kalman filter is an algorithm that iteratively combines noisy measurement data with prior knowledge and knowledge of the dynamics to estimate the state of a dynamical system [5]. A notable, early application was in the Apollo Guidance Computer [7]. We will now show that our BayesMGD algorithm is mathematically equivalent to the Kalman filter algorithm.

In the language of Kalman filters,

- $x_{m-1|m-1}$ is the state estimate at time step m given all measurements up to and including time step m - 1. In our case these are the most likely model parameters $\beta_{m-1|m-1}$;
- $\mathbf{P}_{m-1|m-1}$ is the covariance matrix of that estimate. In our case this is $\Sigma_{m-1|m-1}$. From these the state at time $m$ is predicted as

$$x_{m|m-1} = F_m x_{m-1|m-1} + B_m u_m$$
$$P_{m|m-1} = F_m P_{m-1|m-1} F_m^\dagger + Q_k$$

$$(14)$$

where $F_m$ encodes the dynamics of the system, $B_m u_m$ is the result of external control inputs and $Q_m$ is the process noise. In our case the dynamics are trivial (

$$F_m = \mathbb{1}$$

),, there is no external control input $u_m$ and the process noise is $Q_m = \frac{s^2}{l^2}$. In the next step, observation data is used to refine the prediction. The observations $z_k$ are linearly related to the true state $x_m$ as

$$z_m = H_m x_m + R_m$$

$$(15)$$

where $H_m$ is some (possibly $m$-dependent) matrix and $R_m$ the measurement noise covariance matrix. In our case the observation data are the measurement outcomes $y$, the measurement noise is $\Sigma$ and the design matrix $X$ plays the role of $H_m$. Using this data the prediction is refined to

$$P_{m|m}^{-1} = H_m^\dagger R_m^{-1} z_m + P_{m|m-1}^{-1}$$
$$x_{m|m} = P_{m|m}\left(H_m^\dagger R_m^{-1} z_k + P_{m|m-1}^{-1} x_{m|m-1}\right)$$

$$(16)$$

With the above identifications these are the same equations as Eq. 13 and it is clear that the way BayesMGD predicts the optimal model parameters $\beta$ is the same way that a Kalman filter predicts the system state $x$.

The invention is not restricted to the details of any foregoing embodiments. The claims should not be construed to cover merely the foregoing embodiments, but also any embodiments which fall within the scope of the claims.

## References

[1] K. Bharti, A. Cervera-Lierta, T. H. Kyaw, T. Haug, S. Alperin-Lea, A. Anand, M. Degroote, H. Heimonen, J. S. Kottmann, T. Menke, W.-K. Mok, S. Sim, L.-C. Kwek, and A. Aspuru-Guzik. Noisy intermediate-scale quantum (nisq) algorithms, 2021.

[2] A. Peruzzo, J. McClean, P. Shadbolt, M.-H. Yung, X.-Q. Zhou, P. J. Love, A. Aspuru-Guzik, and J. L. O'Brien. A variational eigenvalue solver on a photonic quantum processor. Nature Communications, 5(1), 2014.

[3] K. J. Sung, J. Yao, M. P. Harrigan, N. C. Rubin, Z. Jiang, L. Lin, R. Babbush, and J. R. McClean. Using models to improve optimizers for variational quantum algorithms. Quantum Science and Technology, 5(4):044008, oct 2020.

[4] M. P. Harrigan, K. J. Sung, M. Neeley, K. J. Satzinger, F. Arute, K. Arya, J. Atalaya, J. C. Bardin, R. Barends, S. Boixo, M. Broughton, B. B. Buckley, D. A. Buell, B. Burkett, N. Bushnell, Y. Chen, Z. Chen, B. Chiaro, R. Collins, W. Courtney, S. Demura, A. Dunsworth, D. Eppens, A. Fowler, B. Foxen, C. Gidney, M. Giustina, R. Graff, S. Habegger, A. Ho, S. Hong, T. Huang, L. B. Ioffe, S. V. Isakov, E. Jeffrey, Z. Jiang, C. Jones, D. Kafri, K. Kechedzhi, J. Kelly, S. Kim, P. V. Klimov, A. N. Korotkov, F. Kostritsa, D. Landhuis, P. Laptev, M. Lindmark, M. Leib, O. Martin, J. M. Martinis, J. R. McClean, M. McEwen, A. Megrant, X. Mi, M. Mohseni, W. Mruczkiewicz, J. Mutus, O. Naaman, C. Neill, F. Neukart, M. Y. Niu, T. E. O'Brien, B. O'Gorman, E. Ostby, A. Petukhov, H. Putterman, C. Quintana, P. Roushan, N. C. Rubin, D. Sank, A. Skolik, V. Smelyanskiy, D. Strain, M. Streif, M. Szalay, A. Vainsencher, T. White, Z. J. Yao, P. Yeh, A. Zalcman, L. Zhou, H. Neven, D. Bacon, E. Lucero, E. Farhi, and R. Babbush. Quantum approximate optimization of non-planar graph problems on a planar superconducting processor. Nature Physics, 17(3):332-336, 2021.

[5] R. E. Kalman. A New Approach to Linear Filtering and Prediction Problems. Journal of Basic Engineering, 82(1):35-45, 03 1960.

[6] J. L. Bosse and A. Montanaro. Probing ground state properties of the kagome antiferromagnetic heisenberg model

**EP 4 174 732 B1**

using the variational quantum eigensolver, 2021.

[7] D. G. Hoag. Apollo guidance, navigation and control. Technical Report E-2411, MIT instrumentation laboratory, Cambridge 39, Massachusetts, 4 1969.

**Claims**

1. A method of estimating an extremum of an expectation value of a random field, the method executed on a computer (200) and utilising a quantum computer (150), wherein the quantum computer comprises a quantum circuit parameterised by a set of circuit parameters and configured to estimate an expectation value of a random variable of interest for the set of circuit parameters, wherein the method comprises:

   storing a set of circuit parameters for the quantum circuit;
   storing a set of model parameters for a surrogate model, wherein the surrogate model is configured, based on the stored set of model parameters, to approximate the expectation value of the random variable of interest produced by the quantum computer for circuit parameters in the vicinity of the stored set of circuit parameters;
   storing uncertainties associated with each of the stored set of model parameters;
   performing an iterative optimisation to update the stored set of circuit parameters until a criterion is met indicating that the stored set of circuit parameters are approximate to circuit parameters representing an extremum of the expectation value of the random field, wherein the iterative optimisation comprises a plurality of iterations to update the stored set of circuit parameters, stored set of model parameters and stored uncertainties associated with the model parameters, wherein each iteration comprises:

      determining a plurality of sampling sets of circuit parameters within a sampling radius of the stored set of circuit parameters;
      for each of the plurality of sampling sets of circuit parameters, executing the quantum computer a plurality of times to determine estimates of the expectation value and the uncertainty of the estimate calculated by the quantum computer for each of the plurality of sampling sets of circuit parameters, wherein the estimate of the uncertainty of the expectation value is determined based on a variance of noisy results returned by the quantum computer when executed a plurality of times;
      determining an updated set of model parameters for the surrogate model in dependence on the estimates and uncertainties of the expectation values calculated for each of the sampling sets of circuit parameters, the stored model parameters and the stored uncertainties associated with the stored model parameters;
      determining interim uncertainties associated with the updated model parameters in dependence on the uncertainty of the expectation values calculated for each of the sampling sets of circuit parameters and the stored uncertainties associated with the stored model parameters;
      determining a gradient of the surrogate model at the stored circuit parameters when parameterised by the updated set of model parameters;
      determining an updated set of circuit parameters in dependence on the stored set of circuit parameters and the determined gradient of the surrogate model, wherein the updated set of circuit parameters represents a descent or ascent along the determined gradient of the surrogate model, relative to the stored set of circuit parameters;
      determining updated uncertainties associated with the updated model parameters for the updated set of circuit parameters, wherein the updated uncertainties are determined in dependence on the determined interim uncertainties and a step size of the descent or ascent along the gradient of the surrogate model used to determine the updated set of circuit parameters;
      updating the stored circuit parameters to correspond to the determined updated set of circuit parameters;
      updating the stored set of model parameters to correspond to the determined updated set of model parameters; and
      updating the stored uncertainties associated with the model parameters to correspond to the determined updated uncertainties.

2. The method of claim 1, wherein the quantum computer (150) is configured to estimate the energy of a state produced by the quantum circuit with respect to a given quantum Hamiltonian for a set of circuit parameters, and wherein the expectation value of the random variable estimated by the quantum computer (150) comprises the energy of a state produced by the quantum circuit for a set of circuit parameters.

3. The method of claim 1 or 2, wherein the quantum computer (150) is configured to simulate a physical system, which

17

may comprise a quantum mechanical system.

4. The method of claim 3, wherein the method comprises a method of estimating a ground state energy of the physical system.

5. The method of any preceding claim, wherein the surrogate model comprises a quadratic model.

6. The method of any preceding claim, wherein the stored model parameters are each represented by a multivariate gaussian distribution.

7. The method of claim 6, wherein the determining an updated set of model parameters for the surrogate model and determining interim uncertainties associated with the updated model parameters comprises performing a Bayesian update of gaussian distributions representing the stored model parameters:
wherein optionally the stored set of model parameters and associated uncertainties represent a prior and the mean and variance of the expectation values calculated for each of the sampling sets of circuit parameters represent new data for performing the Bayesian update.

8. The method of any preceding claim, wherein the step size of the ascent or descent along the gradient of the surrogate model used to determine the updated set of circuit parameters is proportional to the magnitude of the determined gradient.

9. The method of any preceding claim, wherein determining updated uncertainties associated with the updated model parameters for the updated set of circuit parameters comprises adding additional uncertainty to the determined interim uncertainties in dependence on the step size of the descent or ascent along the gradient of the surrogate model used to determine the updated set of circuit parameters,
wherein optionally the additional uncertainty is proportional to the squared step size of the descent or ascent along the gradient of the surrogate model used to determine the updated set of circuit parameters.

10. The method of any preceding claim, wherein performing an iterative optimisation to update the stored set of circuit parameters until a criterion is met indicating that the stored set of circuit parameters are approximate to circuit parameters representing an extremum of the expectation value of the random field of interest comprises performing the iterative optimisation process until the step size of the descent or ascent along the gradient of the surrogate model used to determine the updated set of circuit parameters is less than a threshold step size.

11. The method of any preceding claim, wherein performing an iterative optimisation to update the stored set of circuit parameters until a criterion is met indicating that the stored set of circuit parameters are approximate to circuit parameters representing an extremum of the expectation value of the random field of interest comprises performing the iterative optimisation process until the number of iterations performed reaches a threshold number of iterations.

12. A computer readable medium having instructions stored thereon which, when read by a processor of a computing apparatus, cause the computing apparatus and a quantum computer to perform a method according to any preceding claim.

13. A computing apparatus (200) comprising:

   one or more memories (220);
   one or more classical processors (210) configured to execute instructions stored in the one or more memory units to perform a method according to any of claims 1-11; and
   a quantum computer (150) configured to estimate an expectation value of the random variable of interest for a set of circuit parameters.

14. A computing apparatus (200) according to claim 13, further comprising interaction means for interacting with the quantum computer.

**Patentansprüche**

1. Verfahren zum Schätzen einer Extremität eines Erwartungswertes eines Zufallsfeldes, wobei das Verfahren auf einem Computer (200) ausgeführt wird und einen Quantencomputer (150) nutzt, wobei der Quantencomputer eine Quantenschaltung umfasst, die durch einen Satz von Schaltungsparametern parametriert und dazu konfiguriert ist, einen Erwartungswert einer Zufallsvariablen von Interesse für den Satz von Schaltungsparametern zu schätzen, wobei das Verfahren Folgendes umfasst:

Speichern eines Satzes von Schaltungsparametern für die Quantenschaltung;
Speichern eines Satzes von Modellparametern für ein Ersatzmodell, wobei das Ersatzmodell dazu konfiguriert ist, basierend auf dem gespeicherten Satz von Modellparametern den Erwartungswert der Zufallsvariablen von Interesse, die durch den Quantencomputer für Schaltungsparameter in der Nähe des gespeicherten Satzes von Schaltungsparametern produziert wird, anzunähern;
Speichern von Unsicherheiten assoziiert mit jedem von dem gespeicherten Satz von Modellparametern;
Durchführen einer iterativen Optimierung, um den gespeicherten Satz von Schaltungsparametern zu aktualisieren, bis ein Kriterium erfüllt ist, das angibt, dass sich der gespeicherte Satz von Schaltungsparametern Schaltungsparametern nähert, die eine Extremität des Erwartungswertes des Zufallsfeldes darstellen, wobei die iterative Optimierung eine Vielzahl von Iterationen umfasst, um den gespeicherten Satz von Schaltungsparametern, den gespeicherten Satz von Modellparametern und die gespeicherten Unsicherheiten assoziiert mit den Modellparametern zu aktualisieren, wobei jede Iteration Folgendes umfasst:

Bestimmen einer Vielzahl von Abtastsätzen von Schaltungsparametern innerhalb eines Abtastradius des gespeicherten Satzes von Schaltungsparametern;
für jeden aus der Vielzahl von Abtastsätzen von Schaltungsparametern, Ausführen des Quantencomputers eine Vielzahl von Malen, um Schätzungen des Erwartungswertes und der Unsicherheit der Schätzung berechnet durch den Quantencomputer für jeden aus der Vielzahl von Abtastsätzen von Schaltungsparametern zu bestimmen, wobei die Schätzung der Unsicherheit des Erwartungswertes basierend auf einer Varianz von verrauschten Ergebnissen, die durch den Quantencomputer zurückgegeben werden, wenn eine Vielzahl von Malen ausgeführt, bestimmt wird;
Bestimmen eines aktualisierten Satzes von Modellparametern für das Ersatzmodell in Abhängigkeit von den Schätzungen und Unsicherheiten der Erwartungswerte, die für jeden der Abtastsätze von Schaltungsparametern berechnet werden, den gespeicherten Modellparametern und den gespeicherten Unsicherheiten assoziiert mit den gespeicherten Modellparametern;
Bestimmen von Zwischenunsicherheiten assoziiert mit den aktualisierten Modellparametern in Abhängigkeit von der Unsicherheit der Erwartungswerte, die für jeden der Abtastsätze von Schaltungsparametern berechnet werden, und den gespeicherten Unsicherheiten assoziiert mit den gespeicherten Modellparametern;
Bestimmen eines Gradienten des Ersatzmodells bei den gespeicherten Schaltungsparametern, wenn durch den aktualisierten Satz von Modellparametern parametrisiert;
Bestimmen eines aktualisierten Satzes von Schaltungsparametern in Abhängigkeit von dem gespeicherten Satz von Schaltungsparametern und dem bestimmten Gradienten des Ersatzmodells, wobei der aktualisierte Satz von Schaltungsparametern einen Abstieg oder Aufstieg entlang des bestimmten Gradienten des Ersatzmodells relativ zu dem gespeicherten Satz von Schaltungsparametern darstellt;
Bestimmen von aktualisierten Unsicherheiten assoziiert mit den aktualisierten Modellparametern für den aktualisierten Satz von Schaltungsparametern, wobei die aktualisierten Unsicherheiten in Abhängigkeit von den bestimmten Zwischenunsicherheiten und einer Schrittgröße des Abstiegs oder Aufstiegs entlang des Gradienten des Ersatzmodells, das verwendet wird, um den aktualisierten Satz von Schaltungsparametern zu bestimmen, bestimmt werden;
Aktualisieren der gespeicherten Schaltungsparameter, um dem bestimmten aktualisierten Satz von Schaltungsparametern zu entsprechen;
Aktualisieren des gespeicherten Satzes von Modellparametern, um dem bestimmten aktualisierten Satz von Modellparametern zu entsprechen; und
Aktualisieren der gespeicherten Unsicherheiten assoziiert mit den Modellparametern, um den bestimmten aktualisierten Unsicherheiten zu entsprechen.

2. Verfahren nach Anspruch 1, wobei der Quantencomputer (150) dazu konfiguriert ist, die Energie eines Zustands produziert durch die Quantenschaltung in Bezug auf einen gegebenen Quanten-Hamilton-Operator für einen Satz von Schaltungsparametern zu schätzen, und
wobei der Erwartungswert der Zufallsvariablen, die durch den Quantencomputer (150) geschätzt wird, die Energie eines Zustands produziert durch die Quantenschaltung für einen Satz von Schaltungsparametern umfasst.

3. Verfahren nach Anspruch 1 oder 2, wobei der Quantencomputer (150) dazu konfiguriert ist, ein physisches System zu simulieren, das ein quantenmechanisches System umfassen kann.

4. Verfahren nach Anspruch 3, wobei das Verfahren ein Verfahren zum Schätzen einer Grundzustandsenergie des physischen Systems umfasst.

5. Verfahren nach einem vorhergehenden Anspruch, wobei das Ersatzmodell ein quadratisches Modell umfasst.

6. Verfahren nach einem vorhergehenden Anspruch, wobei die gespeicherten Modellparameter jeweils durch eine multivariate Gauß-Verteilung dargestellt sind.

7. Verfahren nach Anspruch 6, wobei das Bestimmen eines aktualisierten Satzes von Modellparametern für das Ersatzmodell und das Bestimmen von Zwischenunsicherheiten assoziiert mit den aktualisierten Modellparametern Durchführen einer Bayes'schen Aktualisierung von Gauß-Verteilungen, welche die gespeicherten Modellparameter darstellen, umfasst:
wobei optional der gespeicherte Satz von Modellparametern und assoziierten Unsicherheiten einen Prior darstellen und das Mittel und die Varianz der Erwartungswerte, die für jeden der Abtastsätze von Schaltungsparametern berechnet werden, neue Daten zum Durchführen der Bayes'schen Aktualisierung darstellen.

8. Verfahren nach einem vorhergehenden Anspruch, wobei die Schrittgröße des Aufstiegs oder Abstiegs entlang des Gradienten des Ersatzmodells, das verwendet wird, um den aktualisierten Satz von Schaltungsparametern zu bestimmen, proportional zu der Größe des bestimmten Gradienten ist.

9. Verfahren nach einem vorhergehenden Anspruch, wobei das Bestimmen von aktualisierten Unsicherheiten assoziiert mit den aktualisierten Modellparametern für den aktualisierten Satz von Schaltungsparametern Hinzufügen von zusätzlicher Unsicherheit zu den bestimmten Zwischenunsicherheiten in Abhängigkeit von der Schrittgröße des Abstiegs oder Aufstiegs entlang des Gradienten des Ersatzmodells, das verwendet wird, um den aktualisierten Satz von Schaltungsparametern zu bestimmen, umfasst;
wobei optional die zusätzliche Unsicherheit proportional zu der quadratischen Schrittgröße des Abstiegs oder Aufstiegs entlang des Gradienten des Ersatzmodells ist, das verwendet wird, um den aktualisierten Satz von Schaltungsparametern zu bestimmen.

10. Verfahren nach einem vorhergehenden Anspruch, wobei das Durchführen einer iterativen Optimierung, um den gespeicherten Satz von Schaltungsparametern zu aktualisieren, bis ein Kriterium erfüllt ist, das angibt, dass sich der gespeicherte Satz von Schaltungsparametern Schaltungsparametern nähert, die eine Extremität des Erwartungswertes des Zufallsfeldes von Interesse darstellen, Durchführen des iterativen Optimierungsprozesses umfasst, bis die Schrittgröße des Abstiegs oder Aufstiegs entlang des Gradienten des Ersatzmodells, das verwendet wird, um den aktualisierten Satz von Schaltungsparametern zu bestimmen, weniger als eine Schwellenschrittgröße ist.

11. Verfahren nach einem vorhergehenden Anspruch, wobei das Durchführen einer iterativen Optimierung, um den gespeicherten Satz von Schaltungsparametern zu aktualisieren, bis ein Kriterium erfüllt ist, das angibt, dass sich der gespeicherte Satz von Schaltungsparametern Schaltungsparametern nähert, die eine Extremität des Erwartungswertes des Zufallsfeldes von Interesse darstellen, Durchführen des iterativen Optimierungsprozesses umfasst, bis die Anzahl an durchgeführten Iterationen eine Schwellenanzahl an Iterationen erreicht.

12. Computerlesbares Medium, auf dem Anweisungen gespeichert sind, die, wenn durch einen Prozessor einer Rechenvorrichtung gelesen, bewirken, dass die Rechenvorrichtung und ein Quantencomputer ein Verfahren nach einem vorhergehenden Anspruch durchführen.

13. Rechenvorrichtung (200), umfassend:

einen oder mehrere Speicher (220);
einen oder mehrere klassische Prozessoren (210), die dazu konfiguriert sind, Anweisungen auszuführen, die in der einen oder den mehreren Speichereinheiten gespeichert sind, um ein Verfahren nach einem der Ansprüche 1 - 11 durchzuführen; und
einen Quantencomputer (150), der dazu konfiguriert ist, einen Erwartungswert der Zufallsvariablen von Interesse für einen Satz von Schaltungsparametern zu schätzen.

**14.** Rechenvorrichtung (200) nach Anspruch 13, ferner umfassend Interaktionsmittel zum Interagieren mit dem Quantencomputer.

**Revendications**

**1.** Procédé d'estimation d'un extremum d'une valeur de prévision d'un champ aléatoire, le procédé étant exécuté sur un ordinateur (200) et utilisant un ordinateur quantique (150), dans lequel l'ordinateur quantique comprend un circuit quantique paramétré par un ensemble de paramètres de circuit et configuré pour estimer une valeur de prévision d'une variable aléatoire d'intérêt pour l'ensemble de paramètres de circuit, dans lequel le procédé comprend :

le stockage d'un ensemble de paramètres de circuit pour le circuit quantique ;
le stockage d'un ensemble de paramètres de modèle pour un modèle de substitution, dans lequel le modèle de substitution est configuré, sur la base de l'ensemble de paramètres de modèle stockés, pour approcher la valeur de prévision de la variable aléatoire d'intérêt produite par l'ordinateur quantique pour les paramètres de circuit à proximité de l'ensemble de paramètres de circuit stockés ;
le stockage d'incertitudes associées à chacun de l'ensemble de paramètres de modèle stockés ;
la réalisation d'une optimisation itérative pour mettre à jour l'ensemble de paramètres de circuit stockés jusqu'à ce qu'un critère soit rempli indiquant que l'ensemble de paramètres de circuit stockés sont approximatifs de paramètres de circuit représentant un extremum de la valeur de prévision du champ aléatoire, dans lequel l'optimisation itérative comprend une pluralité d'itérations pour mettre à jour l'ensemble de paramètres de circuit stockés, l'ensemble de paramètres de modèle stockés et des incertitudes stockées associées aux paramètres de modèle,
dans lequel chaque itération comprend :

la détermination d'une pluralité d'ensembles d'échantillonnage de paramètres de circuit au sein d'un rayon d'échantillonnage de l'ensemble de paramètres de circuit stockés ;
pour chacun de la pluralité d'ensembles d'échantillonnage de paramètres de circuit, l'exécution, une pluralité de fois, de l'ordinateur quantique pour déterminer des estimations de la valeur de prévision et de l'incertitude de l'estimation calculée par l'ordinateur quantique pour chacun de la pluralité d'ensembles d'échantillonnage de paramètres de circuit, dans lequel l'estimation de l'incertitude de la valeur de prévision est déterminée sur la base d'une variance de résultats bruyants renvoyés par l'ordinateur quantique lorsqu'il est exécuté une pluralité de fois ;
la détermination d'un ensemble de paramètres de modèle mis à jour pour le modèle de substitution en fonction des estimations et des incertitudes des valeurs de prévision calculées pour chacun des ensembles d'échantillonnage de paramètres de circuit, des paramètres de modèle stockés et des incertitudes stockées associées aux paramètres de modèle stockés ;
la détermination d'incertitudes intermédiaires associées aux paramètres de modèle mis à jour en fonction de l'incertitude des valeurs de prévision calculées pour chacun des ensembles d'échantillonnage de paramètres de circuit et des incertitudes stockées associées aux paramètres de modèle stockés ;
la détermination d'un gradient du modèle de substitution au niveau des paramètres de circuit stockés lorsqu'il est paramétré par l'ensemble de paramètres de modèle mis à jour ;
la détermination d'un ensemble de paramètres de circuit mis à jour en fonction de l'ensemble de paramètres de circuit stockés et du gradient déterminé du modèle de substitution, dans lequel l'ensemble de paramètres de circuit mis à jour représente une descente ou une montée le long du gradient déterminé du modèle de substitution, par rapport à l'ensemble de paramètres de circuit stockés ;
la détermination d'incertitudes mises à jour associées aux paramètres de modèle mis à jour pour l'ensemble de paramètres de circuit mis à jour, dans lequel les incertitudes mises à jour sont déterminées en fonction des incertitudes intermédiaires déterminées et d'une taille de pas de la descente ou de la montée le long du gradient du modèle de substitution utilisé pour déterminer l'ensemble de paramètres de circuit mis à jour ;
la mise à jour des paramètres de circuit stockés pour correspondre à l'ensemble de paramètres de circuit mis à jour déterminés ;
la mise à jour de l'ensemble de paramètres de modèle stockés pour correspondre à l'ensemble de paramètres de modèle mis à jour déterminés ; et
la mise à jour des incertitudes stockées associées aux paramètres du modèle pour correspondre aux incertitudes mises à jour déterminées.

**2.** Procédé de la revendication 1, dans lequel l'ordinateur quantique (150) est configuré pour estimer l'énergie d'un état produit par le circuit quantique par rapport à un hamiltonien quantique donné pour un ensemble de paramètres de circuit, et

dans lequel la valeur de prévision de la variable aléatoire estimée par l'ordinateur quantique (150) comprend l'énergie d'un état produit par le circuit quantique pour un ensemble de paramètres de circuit.

3. Procédé de la revendication 1 ou 2, dans lequel l'ordinateur quantique (150) est configuré pour simuler un système physique, qui peut comprendre un système mécanique quantique.

4. Procédé de la revendication 3, dans lequel le procédé comprend un procédé d'estimation d'une énergie d'état fondamental du système physique.

5. Procédé d'une quelconque revendication précédente, dans lequel le modèle de substitution comprend un modèle quadratique.

6. Procédé d'une quelconque revendication précédente, dans lequel les paramètres de modèle stockés sont chacun représentés par une distribution gaussienne multivariée.

7. Procédé de la revendication 6, dans lequel la détermination d'un ensemble de paramètres de modèle mis à jour pour le modèle de substitution et la détermination d'incertitudes intermédiaires associées aux paramètres de modèle mis à jour comprennent la réalisation d'une mise à jour bayésienne de distributions gaussiennes représentant les paramètres de modèle stockés :
éventuellement dans lequel l'ensemble de paramètres de modèle stocké et les incertitudes associées représentent un précédent et la moyenne et la variance des valeurs de prévision calculées pour chacun des ensembles d'échantillonnage de paramètres de circuit représentent de nouvelles données pour réaliser la mise à jour bayésienne.

8. Procédé d'une quelconque revendication précédente, dans lequel la taille de pas de la montée ou de la descente le long du gradient du modèle de substitution utilisé pour déterminer l'ensemble de paramètres de circuit mis à jour est proportionnelle à l'amplitude du gradient déterminé.

9. Procédé d'une quelconque revendication précédente, dans lequel la détermination d'incertitudes mises à jour associées aux paramètres de modèle mis à jour pour l'ensemble de paramètres de circuit mis à jour comprend l'ajout d'incertitudes supplémentaires aux incertitudes intermédiaires déterminées en fonction de la taille de pas de la descente ou de la montée le long du gradient du modèle de substitution utilisé pour déterminer l'ensemble de paramètres de circuit mis à jour, éventuellement dans lequel l'incertitude supplémentaire est proportionnelle à la taille de pas au carré de la descente ou de la montée le long du gradient du modèle de substitution utilisé pour déterminer l'ensemble de paramètres de circuit mis à jour.

10. Procédé d'une quelconque revendication précédente, dans lequel la réalisation d'une optimisation itérative pour mettre à jour l'ensemble de paramètres de circuit stockés jusqu'à ce qu'un critère soit rempli indiquant que l'ensemble de paramètres de circuit stockés sont approximatifs de paramètres de circuit représentant un extremum de la valeur de prévision du champ d'intérêt aléatoire comprend la réalisation du processus d'optimisation itérative jusqu'à ce que la taille de pas de la descente ou de la montée le long du gradient du modèle de substitution utilisé pour déterminer l'ensemble de paramètres de circuit mis à jour soit inférieure à une taille de pas de seuil.

11. Procédé d'une quelconque revendication précédente, dans lequel la réalisation d'une optimisation itérative pour mettre à jour l'ensemble de paramètres de circuit stockés jusqu'à ce qu'un critère soit rempli indiquant que l'ensemble de paramètres de circuit stockés sont approximatifs de paramètres de circuit représentant un extremum de la valeur de prévision du champ aléatoire d'intérêt comprend la réalisation du processus d'optimisation itérative jusqu'à ce que le nombre d'itérations réalisées atteigne un nombre seuil d'itérations.

12. Support lisible par ordinateur sur lequel sont stockées des instructions qui, lorsqu'elles sont lues par un processeur d'un appareil informatique, amènent l'appareil informatique et un ordinateur quantique à réaliser un procédé selon une quelconque revendication précédente.

13. Appareil informatique (200) comprenant :

　　　une ou plusieurs mémoires (220) ;

un ou plusieurs processeurs classiques (210) configurés pour exécuter des instructions stockées dans les une ou plusieurs unités de mémoire pour réaliser un procédé selon l'une quelconque des revendications 1 à 11 ; et un ordinateur quantique (150) configuré pour estimer une valeur de prévision de la variable aléatoire d'intérêt pour un ensemble de paramètres de circuit.

14. Appareil informatique (200) selon la revendication 13, comprenant en outre un moyen d'interaction pour interagir avec l'ordinateur quantique.

FIG. 1

FIG. 2

EP 4 174 732 B1

Controller Apparatus 130

Interaction Module 140

Control Signals 330

Readout Signals 340

150

300

FIG. 3

FIG. 4

**Algorithm 1: BayesMGD**

---

**Input:** function $f$ returning uncertain values $y, \sigma_y$,
initial point $\theta$, stability constant $A$,
learning rate $\gamma$, rate decay exponent $\alpha$,
sample number $k$, maximum evalutions $n$,
tolerance $\epsilon$, length scale $l$,
initial parameters $\beta$, covariance matrix $\Sigma$

$m \leftarrow 0$

**while** $m < n$ **do**

$\quad m \leftarrow m + 1$

$\quad \delta_m \leftarrow \delta/m^{\xi}$ $\qquad\qquad\qquad$ $\triangleright$ Set sample radius

$\quad \gamma_m \leftarrow \gamma/(m + A)^{\alpha}$ $\qquad\qquad$ $\triangleright$ and step width

$\quad S \leftarrow$ sample $k$ points from $\delta_m$-ball around $\theta$

$\quad L \leftarrow \{\}$

$\quad$ **for** $\theta_i \in S$ **do**

$\quad\quad$ Add $f(\theta_i) = (y_i, \sigma_i)$ to $L$

$\quad$ **end**

$\quad (\beta, \Sigma) \leftarrow$ BayesUpdate$(\{\phi_j\}, S, L, \beta, \Sigma)$

$\quad g \leftarrow \nabla_\theta f_s(\theta; \beta)$

$\quad \theta \leftarrow \theta - \gamma_m g$ $\qquad\qquad\qquad$ $\triangleright$ Gradient descent step

$\quad \Sigma \leftarrow \Sigma + \frac{|\gamma_m g|^2}{l^2} \mathbb{1}$ $\qquad\quad$ $\triangleright$ Add uncertainty due to step

$\quad$ **if** $\gamma_m \cdot |g| < \epsilon$ **then**

$\quad\quad (y, \sigma_y) \leftarrow f_s(\theta; \beta, \Sigma)$

$\quad\quad$ **return** $((y, \sigma_y), \theta)$ $\qquad$ $\triangleright$ Return if step size is small

$\quad$ **end**

**end**

$(y, \sigma_y) \leftarrow f_s(\theta; \beta, \Sigma)$

**return** $((y, \sigma_y), \theta)$ $\quad$ $\triangleright$ Return if maximum iterations reached

---

# FIG. 5

---

**Algorithm 2:** BayesUpdate

---

**Input:** model functions $\{\phi_j\}_{j=1}^n$,
evaluation points $\{\theta_i\}_{i=1}^N$,
values with noise $\{(y_i, \sigma_i)\}_{i=1}^N$,
prior parameters with covariance $\beta_0, \Sigma_0$

Create empty $n \times N$ matrix $X$      $\triangleright$ Data preparation

$X_{ji} \leftarrow \phi_j(\theta_i)$

Collect the $y_i$ into $y$

Collect the $\sigma_i^2$ onto diagonal of $\Sigma$

$\Sigma_1^{-1} \leftarrow X^\dagger \Sigma^{-1} X + \Sigma_0^{-1}$      $\triangleright$ Update equations

$\beta_1 \leftarrow \Sigma_1 (X^\dagger \Sigma y + \Sigma_0^{-1} \beta_0)$

**return** $(\beta_1, \Sigma_1)$

---

# FIG. 6

## REFERENCES CITED IN THE DESCRIPTION

### Non-patent literature cited in the description

- Verifying the output of quantum optimizers with ground-state energy lower bounds. **FLAVIO BAC-CARI et al.** arxiv.org. Cornell University Library, 03 November 2020
- **K. BHARTI** ; **A. CERVERA-LIERTA** ; **T. H. KYAW** ; **T. HAUG** ; **S. ALPERIN-LEA** ; **A. ANAND** ; **M. DEGROOTE** ; **H. HEIMONEN** ; **J. S. KOTTMANN** ; **T. MENKE**. *Noisy intermediate-scale quantum (nisq) algorithms*, 2021
- **A. PERUZZO** ; **J. MCCLEAN** ; **P. SHADBOLT** ; **M.-H. YUNG** ; **X.-Q. ZHOU** ; **P. J. LOVE** ; **A. ASPURU-GUZIK** ; **J. L. O'BRIEN**. A variational eigenvalue solver on a photonic quantum processor. *Nature Communications*, 2014, vol. 5 (1)
- **K. J. SUNG** ; **J. YAO** ; **M. P. HARRIGAN** ; **N. C. RUBIN** ; **Z. JIANG** ; **L. LIN** ; **R. BABBUSH** ; **J. R. MCCLEAN**. Using models to improve optimizers for variational quantum algorithms. *Quantum Science and Technology*, October 2020, vol. 5 (4), 044008
- **M. P. HARRIGAN** ; **K. J. SUNG** ; **M. NEELEY** ; **K. J. SATZINGER** ; **F. ARUTE** ; **K. ARYA** ; **J. ATALAYA** ; **J. C. BARDIN** ; **R. BARENDS** ; **S. BOIXO**. Quantum approximate optimization of non-planar graph problems on a planar superconducting processor. *Nature Physics*, 2021, vol. 17 (3), 332-336
- **R. E. KALMAN**. A New Approach to Linear Filtering and Prediction Problems. *Journal of Basic Engineering*, March 1960, vol. 82 (1), 35-45
- **J. L. BOSSE** ; **A. MONTANARO**. *Probing ground state properties of the kagome antiferromagnetic heisenberg model using the variational quantum eigensolver*, 2021
- Apollo guidance, navigation and control. **D. G. HOAG**. Technical Report E-2411. MIT instrumentation laboratory, April 1969